# EUROPÄISCHE PATENTSCHRIFT

(11) **EP 0 408 951 B1**
(45) Veröffentlichungstag und Bekanntmachung des Hinweises auf die Patenterteilung: **30.11.1994**
(21) Anmeldenummer: 90112441.2
(22) Anmeldetag: 29.06.1990
(51) Int. Cl.: B60J 7/185, E05B 65/12

(54) **Vorrichtung zum Niederholen des freien Endes eines Fahrzeugverdecks oder dergleichen**
Device for lowering the free end of a vehicle folding top or the like
Disposition pour amener l'extrémité d'une capote de véhicule ou similaire

(30) Priorität: 18.07.1989 DE 3923695
(43) Veröffentlichungstag der Anmeldung: 23.01.1991
(73) Patentinhaber: Wilhelm Karmann GmbH, D-49084 Osnabrück (DE)
(72) Erfinder: Hahn, Christian, D-2000 Hamburg 52 (DE)
(74) Vertreter: Busse & Busse Patentanwälte

(56) Entgegenhaltungen:
- DE-B- 1 505 721
- US-A- 3 266 838

## Beschreibung

Die Erfindung bezieht sich auf eine Vorrichtung zum Niederholen des vorderen Endes eines Fahrzeugverdecks auf den Frontrahmen des Fahrzeugs gemäß Oberbegriff des Anspruchs 1.

Bei einer bekannten Vorrichtung dieser Art (DE-A-37 43 282) ist am freien Ende der Kolbenstange schwenkbar ein Kraftübertragungshebel angebracht, der durch Bewegung der Kolbenstange um die Schwenkachse des Niederholhakens verschwenkt wird und dabei diesen zwischen seiner angehobenen Eingriffsstellung und seiner abgesenkten Verriegelungsstellung verschwenkt. Eine schwenkbare Riegelklinke wird von einer Feder in Richtung eines verriegelnden Eingriffs mit dem Niederholhaken beaufschlagt und somit bei entsprechender Verschwenkung des Niederholhakens durch den Kraftübertragungshebel in verriegelnden Eingriff mit dem Niederholhaken gedrückt, um diesen in seiner abgesenkten Verriegelungsstellung festzulegen. Um den Niederholhaken in die angehobene Eingriffsstellung zurückzubewegen, wird zunächst der Kraftübertragungshebel durch entsprechende Bewegung der Kolbenstange etwas bezüglich dem Niederholhaken verschwenkt, da der Kraftübertragungshebel über einen Vorsprung in Eingriff mit einer Öffnung im Niederholhaken steht und dieser Vorsprung begrenzt in der Öffnung bewegt werden kann. Durch diese den Niederholhaken noch nicht verlagernde Schwenkbewegung des Kraftübertragungshebels wird die Riegelklinke außer Eingriff mit dem Niederholhaken gedrückt, so daß dieser bei weiterer Verschwenkung des Kraftübertragungshebels von diesem in die angehobene Eingriffsstellung verschwenkt werden kann.

Die bekannte Vorrichtung ermöglicht zwar die mechanische Verriegelung des Niederholhakens in der abgesenkten Verriegelungsstellung, hat jedoch den Nachteil einer verhältnismäßig großen Bauhöhe, da einerseits ein Kraftübertragungselement benötigt wird, das um die Schwenkachse des Niederholhakens verschwenkt wird und das schwenkbar am Ende der Kolbenstange befestigt ist, und da andererseits eine Federanordnung erforderlich ist, um die Riegelklinke mit einer Kraft in Richtung auf den verriegelnden Eingriff mit dem Niederholhaken zu beaufschlagen.

Es ist ferner eine Vorrichtung bekannt (DE-B-15 05 721), bei der der jeweilige Niederholhaken über einen zweiarmigen Hebel mit der Kolbenstange eines hydraulischen Arbeitszylinders gekoppelt ist, der den Niederholhaken zwischen einer angehobenen Eingriffsstellung und einer abgesenkten Verriegelungsstellung bewegt und der insbesondere den Niederholhaken in der abgesenkten Verriegelungsstellung hält, um auf diese Weise das Fahrzeugverdeck in der niedergeholten Stellung am Frontrahmen festzuhalten. Es ist daher erforderlich, daß die Kolbenstange des Arbeitszylinders dauernd mit Hydraulikflüssigkeit beaufschlagt wird, um den Niederholhaken in der Verriegelungsstellung zu halten, was nicht nur konstruktiv aufwendig ist, sondern auch insofern ein Risiko beinhaltet, als bei Ausfall des Hydrauliksystems der Niederholhaken sich von der Verriegelungsstellung in die Eingriffsstellung bewegen kann, wodurch das Fahrzeugverdeck ungewollt geöffnet werden würde.

Es ist Aufgabe der Erfindung, eine Vorrichtung zum Niederholen und Halten des vorderen Endes eines Fahrzeugverdecks nach dem Oberbegriff des Patentanspruchs 1 auf einfache Weise so auszubilden, daß bei geringer Bauhöhe ein großer Niederholweg erreicht werden kann und eine zuverlässige Bewegung der Riegelklinke in die und aus der verriegelnden Lage sichergestellt wird.

Zur Lösung dieser Aufgabe wird eine Vorrichtung gemäß Oberbegriff des Anspruchs 1 durch die kennzeichnenden Teile dieses Anspruchs ausgestaltet.

Bei der erfindungsgemäßen Vorrichtung sind an der Kolbenstange Mitnehmerelemente angeordnet, die die Riegelklinke bei Bewegung des Niederholhakens in die Verriegelungsstellung zwangsweise in Eingriff mit dem Eingriffsbereich des Niederholhakens bewegen, und die die Riegelklinke aus dem Eingriffsbereich bewegen, wenn die Kolbenstange ihre Bewegung zum Verschwenken des Niederholhakens von der Verriegelungsstellung in die Eingriffstellung beginnt.

Somit ist bei der erfindungsgemäßen Vorrichtung keine Federanordnung für die Bewegung der Riegelklinke in die verriegelnde Stellung erforderlich, wodurch die Bauhöhe der gesamten Vorrichtung verringert und der Einbau in den Windlauf eines Cabriolets ermöglicht wird.

Um den Niederholhaken aus einer Verriegelungsstellung zu bewegen, um das vordere Ende des Fahrzeugverdecks freizugeben, erfolgt zunächst eine Verlagerung der Kolbenstange des Arbeitszylinders infolge zugeführtem Arbeitsfluid bezüglich des länglichen Kopplungsbereichs, so daß die Kolbenstange keine Verlagerung des Niederholhakens bewirkt, jedoch bei dieser ersten Bewegung die Riegelklinke durch ein Mitnehmerelement außer Eingriff mit dem Eingriffsbereich des Niederholhakens gebracht wird. Hat dann die Kolbenstange das Ende des länglichen Kopplungsbereiches erreicht, schwenkt sie den Niederholhaken aus der Verriegelungsstellung in die Eingriffsstellung, und das vordere Ende des Fahrzeugverdecks kommt frei.

Durch die erfindungsgemäß vorgesehene mechanische Verriegelung des bzw. der Niederholhaken in der Verriegelungsstellung wird das Fahrzeugverdeck, die Haube oder dergleichen in der niedergeholten Stellung auf dem Rahmen mechanisch verriegelt, und diese mechanische Verriegelung wird zwangsläufig gelöst, wenn die Antriebseinrichtung aktiviert wird, um die zugehörige Betätigungsstange zur Bewegung des Niederholhakens von der Verriegelungsstellung in die Eingriffsstellung zu verlagern.

Da die Niederholhaken beim Eingriff ihrer Angriffskurve mit den Eingriffselementen eine Schwenkbewegung ausführen, bei der auf die Eingriffselemente im wesentlichen senkrecht nach unten gerichtete Kräfte wirken, kann ein großer Niederholweg durchlaufen werden, ohne daß die Niederholhaken in der heruntergeschwenkten Lage über den Rahmen überstehen.

Der längliche Kopplungsbereich ist vorzugsweise ein Langloch, in das ein an der Betätigungsstange befestigter Mitnehmer, etwa eine auf einer Achse sitzende Rolle, eingreift.

Das die Riegelklinke außer Eingriff mit dem Eingriffsbereich des Niederholhakens bringende Mitnehmerelement kann auf einen Hebel wirken, der auf eine die Riegelklinke tragenden, drehbar gelagerten Buchse wirkt, so daß bei Verlagerung des Hebels durch das Mitnehmerelement auch die Buchse und somit auch die Riegelklinke bewegt werden.

Es ist auch möglich, die Riegelklinke mit einer Aussparung zu versehen, in die ein einziges Mitnehmerelement eingreift, so daß dieses Mitnehmerelement bei Bewegung der Betätigungsstange die Riegelklinke entsprechend der Bewegungsrichtung der Betätigungsstange verlagern kann, also sowohl in die Stellung für die Verriegelung des Niederholhakens als auch in die Eingriffsstellung für den Niederholhaken bewegt werden kann.

Die Antriebseinrichtung für die erfindungsgemäße Vorrichtung kann ein hydraulischer oder pneumatischer Arbeitszylinder sein, dessen Kolbenstange die Betätigungsstange bildet.

Es ist jedoch beispielsweise auch möglich, die Betätigungsstange exzentrisch an einem drehbar am Rahmen gehalterten Zahnrad anzulenken. Soll bei einer derartigen Ausbildung eine manuelle Betätigung der erfindungsgemäßen Vorrichtung möglich sein, kann das Zahnrad mit einem mittels eines Hebels von Hand drehbaren Antriebszahnrad in Eingriff stehen, so daß bei Verschwenkung des Hebels das Antriebszahnrad gedreht und so das Zahnrad zur Verlagerung der Betätigungsstange verdreht wird.

Die Erfindung wird im folgenden anhand der schematisch Ausführungsbeispiele zeigenden Figuren näher erläutert.
- Figur 1: zeigt in einer Teilansicht von vorn die Vorrichtung zum Niederholen in der Eingriffsstellung sowie das vordere oder freie Ende des kurz vor der geschlossenen Stellung befindlichen Fahrzeugverdecks.
- Figur 2: zeigt in einer Darstellung entsprechend Figur 1 das niedergeholte Fahrzeugverdeck mit der Vorrichtung in der verriegelten Stellung.
- Figur 3: zeigt in einem Schnitt entlang der Linie III-III aus Figur 4 den mit der Betätigungs- oder Kolbenstange gekoppelten Teil der Vorrichtung in der Stellung gemäß Figur 2.
- Figur 4: zeigt eine Ansicht von unten auf die Vorrichtung gemäß Teildarstellung aus Figur 3.
- Figur 5: zeigt in perspektivischer Teildarstellung den mit der Kolbenstange gekoppelten Teil der Vorrichtung in der Stellung gemäß Figur 2.

Obwohl die Erfindung nachstehend in Zusammenhang mit einem Fahrzeugverdeck beschrieben wird, läßt sie sich auch zum Niederholen einer Haube oder dergleichen, etwa einer Kofferraumhaube oder einer Motorhaube einsetzen.

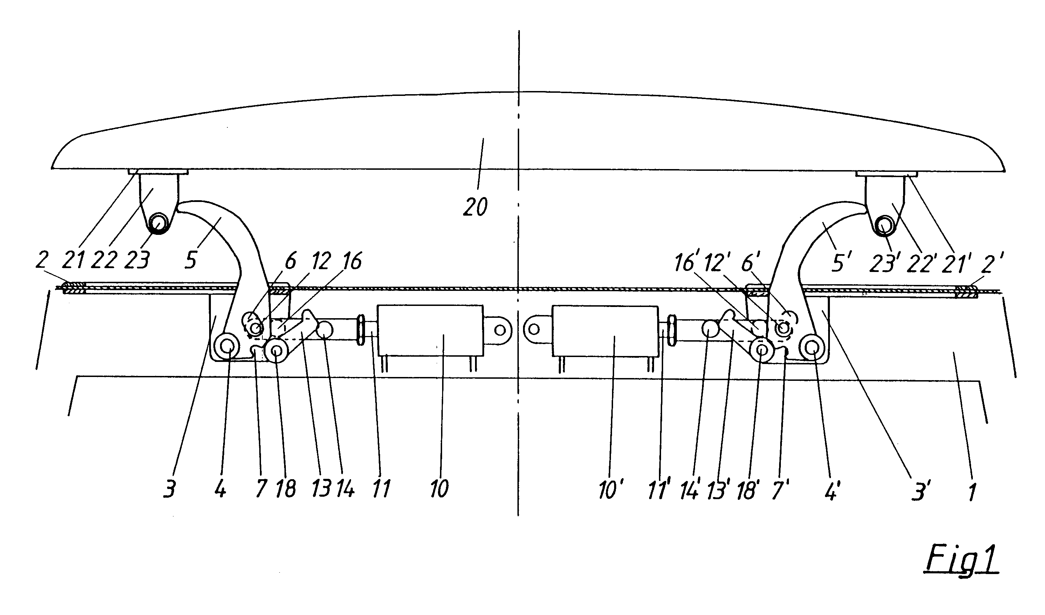

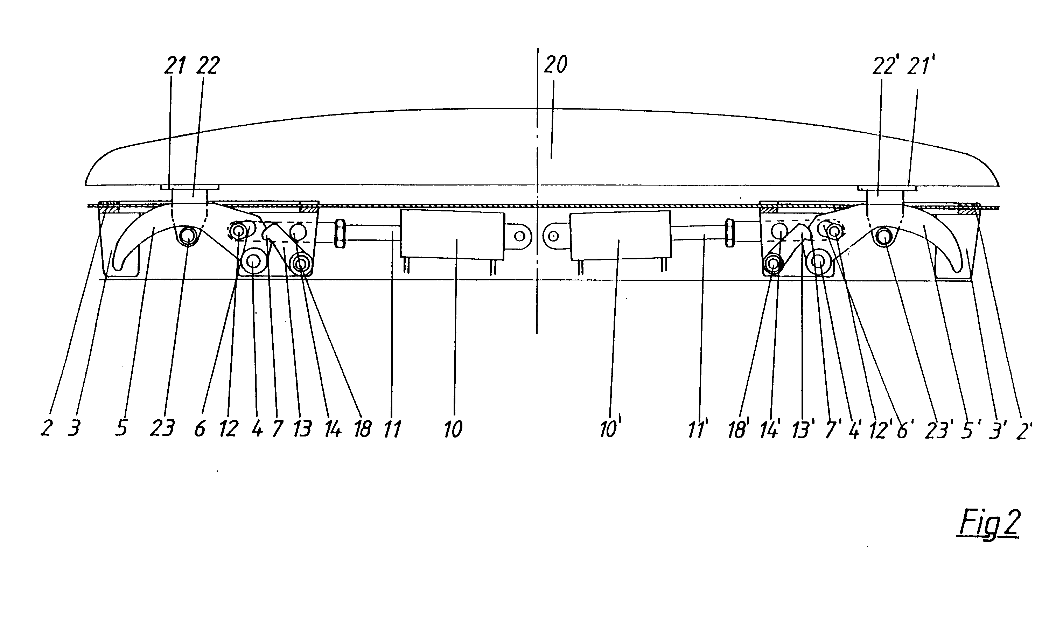

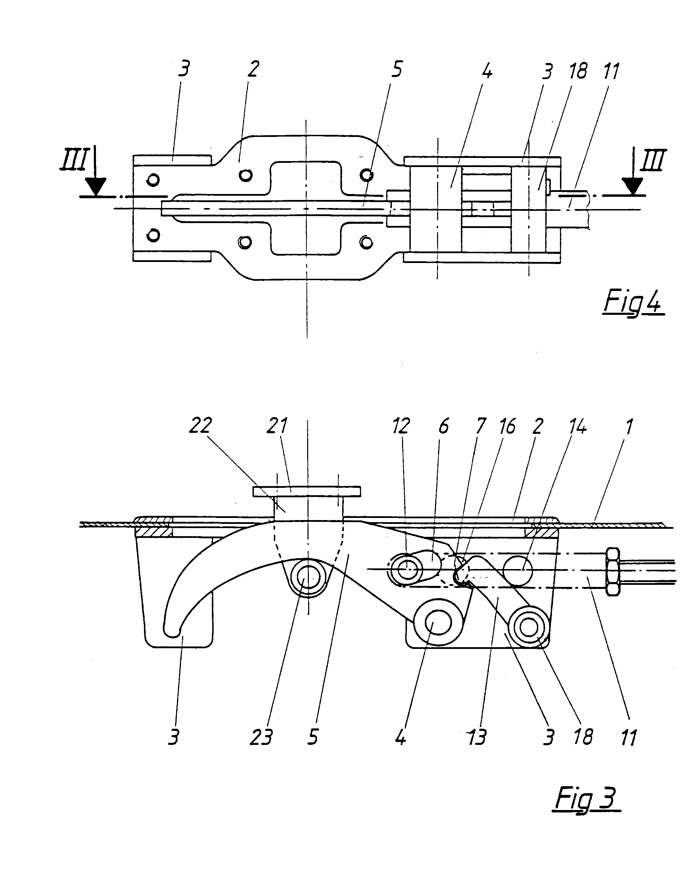

In den Figuren 1 und 2 ist der oberhalb der Frontscheibe eines Kraftfahrzeugs liegende Teil des Frontrahmens 1 angedeutet, und oberhalb dieses Frontrahmens 1 befindet sich das vordere Ende eines Fahrzeugverdecks 20, das in nicht dargestellter Weise entweder von Hand oder mittels eines Antriebs aus der Stellung gemäß Figur 1 in eine vollständig zurückgeklappte Stellung und aus dieser in die Stellung gemäß Figur 1 bewegt werden kann.

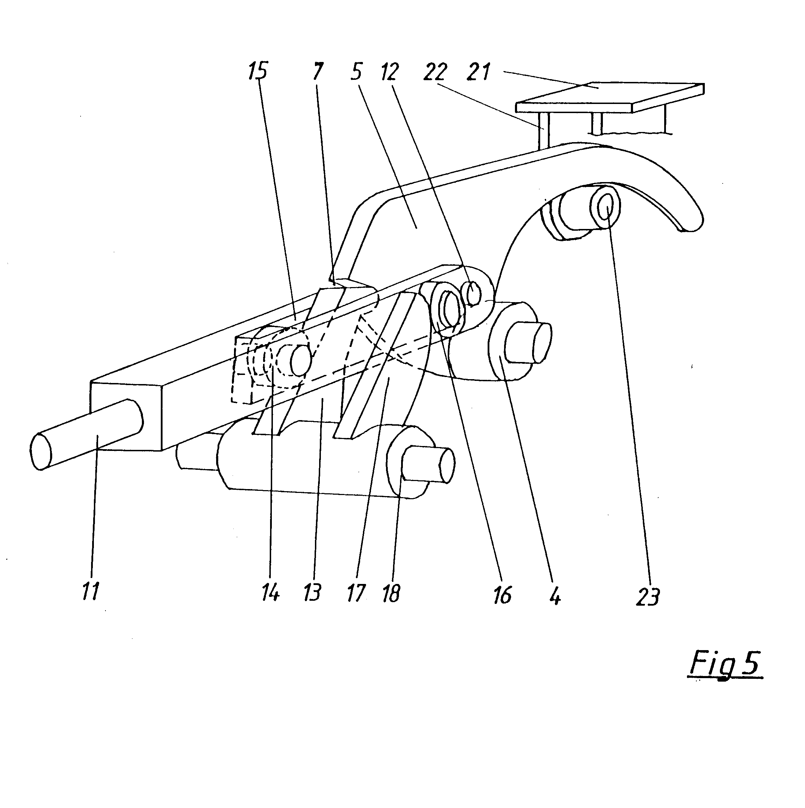

Die Vorrichtung zum Niederholen und Festhalten des vorderen Endes des Fahrzeugverdecks 20 enthält zwei als Antrieb dienende hydraulische Arbeitszylinder 10, 10′, die am Frontrahmen 1 befestigt sind und deren Kolbenstangen 11, 11′ jeweils nach außen gerichtet sind. Die beiden Kolbenstangen wirken mit gleich aufgebauten Elementen zusammen, die in den Figuren 1 bis 5 mit gleichen Bezugszeichen bezeichnet sind, wobei die zur in den Figuren 1 und 2 rechten Kolbenstange 11' gehörenden Bauelemente zusätzlich mit ′ gekennzeichnet sind. Im folgenden wird daher nur die Funktionsweise einer Kolbenstange und der ihr zugeordneten Bauelemente beschrieben, wobei jedoch, ohne besonderen Hinweis, teilweise auf die in den Figuren 1 und 2 linke Anordnung und teilweise auf die in den Figuren 1 und 2 rechte Anordnung Bezug genommen wird.

Die am freien Ende als Gabelstück ausgebildete Kolbenstange 11 ist über eine quer zu ihrer Längsachse im Schlitz 15 des Gabelstücks befestigte Rolle 12 mit einem Niederholhaken 5 gekoppelt. Der Niederholhaken 5 ist über eine Achse 4 verschwenkbar an einem Trägerteil befestigt, das eine am Frontrahmen 1 des Kraftfahrzeugs befestigte Trägerplatte 2 und von dieser ausgehende, sich parallel und im Abstand voneinander nach unten erstreckende Trägerelemente 3 aufweist, wobei die Achse 4 von den Trägerelementen 3 gehalten ist. Die Rolle 12 steht in Eingriff mit einem im Niederholhaken 5 ausgebildeten Langloch 6, so daß sich die Rolle 12 in der in Figur 1 gezeigten Eingriffsstellung des Verriegelungshakens 5 am inneren Ende und in der in den Figuren 2, 3 und 5 gezeigten Verriegelungsstellung des Verriegelungshakens 5 am äußeren Ende des Langlochs 6 befindet.

Am inneren Ende, d.h. dem dem Arbeitszylinder 10 zugewandten Ende, ist am Niederholhaken 5 eine einen Eingriffsbereich bildender Aussparung 7 ausgebildet. Zwischen den Trägerelementen 3 des Trägerteils ist schwenkbar eine Buchse 18 gelagert, auf der unverdrehbar eine Riegelklinke 13 befestigt ist, deren freies Ende einen Riegelvorsprung aufweist, der in der in den Figuren 2, 3 und 5 gezeigten Verriegelungsstellung des Niederholhakens 5 in Eingriff mit der Aussparung 7 des Niederholhakens 5 steht und so diesen mechanisch gegen eine Verlagerung aus der Verriegelungsstellung abstützt. Auf der Buchse 18 sitzt ferner unverdrehbar ein Hebel 17, dessen dem freien Ende des Niederholhakens 5 zugewandte Seite in Eingriff mit einer ein Mitnehmerelement bildenden Rolle 16 steht, die ebenso auf einer an der Kolbenstange 11 befestigten Achse sitzt, wie eine ein weiteres Mitnehmerelement bildende Rolle 14, die in einem Schlitz 15 des Gabelstücks der Kolbenstange 11 gelagert ist und die in Eingriff mit der dem freien Ende des Niederholhakens 5 abgewandten Seite der Riegelklinke 13 steht.

An der Unterseite des vorderen Endes des Fahrzeugverdecks 20 sind Halterungen befestigt, die eine Halteplatte 21, 21′ aufweisen, die an der Unterseite des vorderen Endes des Fahrzeugverdecks 20 angeschraubt ist und von der aus sich im Abstand voneinander befindliche, parallel zueinander verlaufende Halteelemente 22 nach unten erstrecken, zwischen denen eine Halterolle 23 gelagert ist. Die Halterungen 22, 22′ sind derart am vorderen Ende des Verdecks 20 befestigt, daß die sich in der Eingriffsstellung (Figur 1) befindenden Niederholhaken 5, 5′ bei in die vordere, kurz oberhalb des Frontrahmens 1 verlagerter Stellung des vorderen Endes des Fahrzeugverdecks 20 oberhalb der Halterollen 23, 23′ zwischen die Halteelemente 22, 22′ geführt werden können. Um dies zu bewirken, werden in der Stellung gemäß Figur 1 die Kolbenstangen 11, 11′ des Arbeitszylinders 10 durch entsprechende Zufuhr von Hydraulikfluid ausgefahren, so daß die Rollen 12, 12′ sich zunächst in den Langlöchern 6, 6′ nach außen verlagern, um dann bei Anlage an den äußeren Enden der Langlöcher 6, 6′ die Niederholhaken 5, 5′ nach außen zwischen die Halteelemente 22, 22′ zu verschwenken, so daß die untere, bogenförmige Fläche der Niederholhaken 5, 5′ in Eingriff mit der Halterolle 23, 23′ kommt. In diesem Zusammenhang sei erwähnt, daß die untere, eine Angriffskurve bildende Fläche der Niederholhaken 5, 5′ vorzugsweise so geformt ist, daß sie in jeder Eingriffsstellung mit der zugehörigen Halterolle 23, 23′ auf die Halterolle eine im wesentlichen senkrecht nach unten wirkende Kraft ausübt. Durch die weitere Verlagerung der Kolbenstangen 11, 11′ werden die Niederholhaken 5, 5′ um ihre zugehörige Achse 4, 4′ verschwenkt und dadurch das vordere Ende des Fahrzeugverdecks 20 nach unten in die Lage gemäß Figur 2 gezogen.

Bei der Ausfahrbewegung der Kolbenstangen 11, 11′ bewirken die als Mitnehmer dienenden Rollen 14, 14′ durch Eingriff mit der zugehörigen Riegelklinke 13, 13′ deren Verschwenkung, so daß das freie Ende der Riegelklinke 13, 13′ schließlich in Eingriff mit der zugehörigen Aussparung 7, 7′ im Niederholhaken 5, 5′ kommt und die Riegelklinke 13, 13′ den zugehörigen Niederholhaken 5, 5′ mechanisch gegen Verschwenkung aus der erreichten Lage abstützt. In dieser in den Figuren 2, 3 und 5 gezeigten Stellung braucht die Kolbenstange 11, 11′ des Arbeitszylinders 10 nicht mehr mit Hydraulikfluid beaufschlagt zu werden, da, wie erwähnt, die Niederholhaken 5, 5′ durch den Eingriff mit der zugehörigen Riegelklinke 13, 13′ mechanisch in der Verriegelungsstellung festgehalten werden.

Soll das Fahrzeugverdeck 20 geöffnet werden, wird der Arbeitszylinder 10, 10′ derart mit Hydraulikfluid beaufschlagt, daß seine Kolbenstangen 11, 11′ in die Arbeitszylinder zurückgezogen werden. Zu Beginn dieser Rückziehbewegung verlagert sich die jeweilige Rolle 12, 12′ im zugehörigen Langloch 6, 6′ des Niederholhakens 5, 5′, ohne auf den Niederholhaken zu wirken. Diese Verlagerungsbewegung führt durch Eingriff der als Mitnehmerelement dienenden Rolle 16, 16′ mit dem Hebel 17 (Figur 5) zu einer Verdrehung der Buchse 18 und somit zu einer Bewegung der Riegelklinke 13, 13′, durch die ihr freies Ende aus der Aussparung 7, 7′ herausgeschwenkt wird. Auf diese Weise wird zu Beginn der Rückzugbewegung der Kolbenstangen 11, 11′ die mechanische Verriegelung der Niederholhaken 5, 5′ gelöst, so daß die Niederholhaken 5, 5′ ihre Schwenkbewegung um die Achsen 4, 4′ in die Stellung gemäß Figur 1 beginnen können, wenn die Rolle 12, 12′ das innere Ende des Langloches 6, 6′ erreicht hat und so die Verschwenkung der Niederholhaken 5, 5′ bewirkt.

Wenn die Niederholhaken 5, 5′ durch die Kolbenstangen 11, 11′ in die Stellung gemäß Figur 1 zurückgezogen sind, kann das Fahrzeugverdeck 20 entweder mechanisch oder von Hand vollständig geöffnet werden. Die Niederholhaken 5, 5′ werden durch Ausfahren der Kolbenstange 11, 11′ wieder in die Stellung Figur 2 geschwenkt, um während der Fahrt versenkt zu sein.

## Patentansprüche

1. Vorrichtung zum Niederholen des vorderen Endes eines Fahrzeugverdecks (20) auf den Frontrahmen (1) des Fahrzeugs aus einer Stellung, in der sich das Fahrzugverdeck kurz vor der geschlossenen Stellung und sein vorderes Ende oberhalb dieser befindet, und zum Halten des vorderen Endes des Fahrzeugverdecks (20) in der niedergeholten Stellung, mit am vorderen Ende des Fahrzeugverdecks vorgesehenen Eingriffselementen (Halterolle 23 bzw. 23') für den Eingriff jeweils eines am Frontrahmen vorgesehenen Niederholhakens (5 bzw. 5'), der mit der Kolbenstange (11 bzw. 11') eines hydraulischen oder pneumatischen Arbeitszylinders (10 bzw. 10') gekoppelt und von diesem zwischen einer angehobenen Eingriffsstellung und einer abgesenkten Verriegelungsstellung bewegbar ist, wobei der Niederholhaken (5 bzw. 5') einen Eingriffsbereich (Aussparung 7 bzw. 7') für eine schwenkbar gelagerte Riegelklinke (13 bzw. 13') aufweist, die bei Verschwenkung des eine gekrümmte Angriffskurve zum gleitenden Eingriff mit dem Eingriffselement (Halterolle 23 bzw. 23') aufweisenden Niederholhakens (5 bzw. 5') in die Verriegelungsstellung in verriegelnden Eingriff mit dem Eingriffsbereich des Niederholhakens kommt und die bei Bewegung der Kolbenstange (11 bzw. 11') zur Verlagerung des Niederholhakens aus der Verriegelungsstellung außer Eingriff bewegt wird, wozu bei Bewegung der Kolbenstange (11 bzw. 11') zur Verlagerung des Niederholhakens (5 bzw. 5') aus der Verriegelungsstellung eine begrenzte Verlagerung der Kolbenstange bezüglich dem Niederholhaken erfolgt, bei der die Riegelklinke (13 bzw. 13') von einem an der Kolbenstange (11 bzw. 11') angebrachten Mitnehmerelement (16 bzw. 16') außer Eingriff mit dem Eingriffsbereich (Aussparung 7 bzw. 7') des Niederholhakens (5 bzw. 5') gebracht wird, **dadurch gekennzeichnet**, daß die Kolbenstange (11 bzw. 11') über einen am Niederholhaken (5 bzw. 5') vorgesehenen, länglichen Kopplungsbereich (Langloch 6 bzw. 6') mit diesem gekoppelt ist und daß die Riegelklinke (13 bzw. 13') von einem an der Kolbenstange (11 bzw. 11') angeordneten Mitnehmerelement (Rolle 14 bzw. 14') in verriegelnden Eingriff mit dem Eingriffsbereich (Aussparung 7 bzw. 7') des Niederholhakens (5 bzw. 5') bewegt wird.

2. Vorrichtung nach Anspruch 1, dadurch gekennzeichnet, daß der Kopplungsbereich aus einem Langloch (6 bzw. 6') besteht, in das ein an der Kolbenstange (11 bzw. 11') befestigter Mitnehmer (Rolle 12 bzw. 12') eingreift.

3. Vorrichtung nach Anspruch 1 oder 2, dadurch gekennzeichnet, daß das die Riegelklinke (13 bzw. 13') außer Eingriff mit dem Eingriffsbereich (Aussparung 7 bzw. 7') des Niederholhakens (5 bzw. 5') bringende Mitnehmerelement (Rolle 16 bzw. 16') auf einen Hebel (17) wirkt, der auf einer die Riegelklinke (13 bzw. 13') tragenden, drehbar gelagerten Buchse (18 bzw. 18') sitzt.

## Claims

1. A device for pulling down the front end of a folding roof (20) of a vehicle onto the front frame (1) of the vehicle from a position in which the folding roof is positioned just in front of the closed position while its front end is above this and for holding the front end of the folding roof (20) of the vehicle in the pulled-down position, with, provided at the front end of the folding vehicle roof, engaging elements (holding roller 23, 23') for engagement in a respective pull-down hook (5, 5') provided on the front frame and which can be coupled to the piston rod (11, 11') of a hydraulic or pneumatic working cylinder (10, 10') by which it can be moved between a raised engaging position and a lowered locking position, the pull-down hook (5, 5') comprising an engaging portion (recess 7, 7') for a pivotally mounted pawl (13, 13') which, upon pivoting of the pull-down hook (5, 5') which comprises an engaging curve for sliding engagement with the engaging element (the pressure roller 23, 23') into the locked position, enters into locking engagement with the engaging part of the pull-down hook and which, upon a movement of the piston rod (11 or 11') in order to displace the pull-down hook from the locking position, is moved out of engagement for which purpose, upon movement of the piston rod (11, 11') for displacing the pull-down hook (5 or 5') from the locking position, there is a limited displacement of the piston rod in respect of the pull-down hook, during which the pawl (13 or 13') is disengaged from the engaging portion (recess 7, 76) of the pull-down hook (5, 5') by an entraining element (16 or 16') provided on the piston rod (11 or 11'), characterised in that, via an elongated coupling portion (elongated hole 6, 6') provided on the pull-down hook (5, 5'), the piston rod (11, 11') is coupled to this latter, the pawl (13, 13') being moved by an entraining element (roller 14, 14') disposed on the piston rod (11, 11') into locking engagement with the engaging portion (recess 7, 7') of the pull-down hook (5, 5').

2. A device according to claim 1, characterised in that the coupling portion consists of an elongated hole (6, 6') engaged by an entraining means (roller 12 or 12') fixed on the piston rod (11, 11').

3. A device according to claim 1 or 2, characterised in that the entraining element (roller 16, 16') which disengages the pawl 13, 13') from the engaging portion (recess 7, 7') of the pull-down hook (5, 5') acts on a lever (17) which is seated on a rotatably mounted bush (18, 18') which carries the pawl (13, 13').

## Revendications

1. Dispositif pour abaisser l'extrémité avant d'une capote de véhicule (20) sur le cadre frontal (1) du véhicule, à partir d'une position dans laquelle la capote du véhicule se trouve peut avant la position de fermeture et son extrémité antérieure se trouve au-dessus de cette position et pour maintenir l'extrémité antérieure de la capote du véhicule (20) dans la position abaissée, avec des éléments de préhension prévus à l'extrémité avant de la capote du véhicule (galets de maintien 23 ou 23') pour la venue en prise respectivement d'un crochet d'abaissement (5 ou 5') prévu sur le cadre frontal, qui est couplé avec la tige (11 ou 11') d'un vérin hydraulique ou pneumatique (10 ou 10') et qui est mobile grâce à celui-ci entre une position devenue en prise soulevée et une position de verrouillage abaissée, le crochet d'abaissement (5 ou 5') présentant une zone devenue en prise (évidement 7 ou 7') pour un cliquet de verrouillage (13 ou 13') monté de façon à pouvoir pivoter, qui, lors du pivotement du crochet d'abaissement (5 ou 5'), présente une courbe arrondie d'accrochage pour obtenir une venue en prise glissante avec l'élément d'accrochage (galet de maintien 23 ou 23'), et vient dans la position de verrouillage en prise assurant le verrouillage avec la zone d'accrochage du crochet d'abaissement et qui lors du mouvement de la tige du vérin (11 ou 11') est déplacé pour sortir le crochet d'abaissement de la position de verrouillage de sa position accrochée, un déplacement limité de la tige du vérin par rapport au crochet d'abaissement ayant lieu lors du mouvement de la tige du vérin (11 ou 11') servant à déplacer le crochet d'abaissement (5 ou 5') hors de la position de verrouillage, déplacement lors duquel le cliquet de verrouillage (13 ou 13') est mis par un élément d'entraînement (16 ou 16') disposé sur la tige de vérin (11 ou 11') hors de la zone d'accrochage (évidement 7 ou 7') du crochet d'abaissement (5 ou 5'), dispositif caractérisé en ce que la tige de vérin (11 ou 11') est couplée par l'intermédiaire d'une zone longitudinale d'accouplement (trou oblong 6 ou 6'), prévue sur le crochet d'abaissement (5 ou 5') avec celle-ci et en ce que le cliquet de verrouillage (13 ou 13') est déplacé par un élément d'entraînement (galet 14 ou 14') disposé sur la tige de vérin (11 ou 11') et est mis en prise assurant le verrouillage avec la zone d'accrochage (évidement 7 ou 7') du crochet d'abaissement (5 ou 5').

2. Dispositif selon la revendication 1, caractérisé en ce que la zone d'accouplement consiste en un trou oblong (6 ou 6'),dans lequel vient en prise un entraîneur (galet 12 ou 12') fixé sur la tige de vérin (11 ou 11').

3. Dispositif selon la revendication 1 ou 2, caractérisé en ce que l'élément d'entraînement (galet 16 ou 16') mettant le cliquet de verrouillage (13 ou 13') hors de prise d'avec la zone d'accrochage (évidement 7 ou 7') du crochet d'abaissement (5 ou 5') agit sur un levier qui se trouve sur une douille (18 ou 18'), montée de façon à pouvoir tourner, portant le cliquet de verrouillage (13 ou 13').
